(19) Europäisches Patentamt
European Patent Office
Office européen des brevets

(11) Publication number: 0 363 524
A1

# (12) EUROPEAN PATENT APPLICATION

(21) Application number: 88117165.6

(22) Date of filing: 14.10.88

(51) Int. Cl.5: C08F 222/40 , C08L 79/08 , C08G 73/10 , C08G 73/14 , C08G 69/32

Claims for the following Contracting State: ES.

(43) Date of publication of application:
18.04.90 Bulletin 90/16

(84) Designated Contracting States:
AT BE DE ES FR GB GR IT LU NL SE

(71) Applicant: HERCULES INCORPORATED
Hercules Plaza
Wilmington Delaware 19894(US)

(72) Inventor: Chu, Sung Gun
3530 Hopkins Road
Wilmington Delaware 19808(US)
Inventor: Jabloner, Harold
527 Cherry Street
Wilmington Delaware 19720(US)
Inventor: Nguyen, Tuyen Thanh
6008 Stone Pine Road/The Pines
Wilmington Delaware 19808(US)

(74) Representative: Lederer, Franz, Dr. et al
Van der Werth, Lederer & Riederer
Patentanwälte Lucile-Grahn-Strasse 22
D-8000 München 80(DE)

## (54) Bismaleimide compositions containing high glass transition temperature and soluble reactive oligomers and composites prepared therefrom.

(57) Described are (1) terminally unsaturated oligomers having terminal amine groups or terminal carboxylic acid derivative groups and glass transition temperatures ($T_g$) above about 170°, in which the unsaturated moieties have two double bonds in conjugated relationship, and which are soluble in uncured multifunctional maleimides, and (2) thermosetting resins comprising mixtures of the terminally unsaturated oligomers and the multifunctional maleimides. The cured resins have a fracture toughness, $K_{IC}$ of at least 1.0 $MPam^{1/2}$ and glass transition temperatures of at least 200° C.

EP 0 363 524 A1

# BISMALEIMIDE COMPOSITIONS CONTAINING HIGH GLASS TRANSITION TEMPERATURE AND SOLUBLE REACTIVE OLIGOMERS AND COMPOSITES PREPARED THEREFROM

This invention relates to thermosetting compositions that are useful in the preparation of temperature-resistant composites that comprise high-strength filaments and matrices composed of thermoset resins that have been cured through crosslinking reactions involving multifunctional maleimides.

Such temperature-resistant composites are particularly useful because they can be cured into temperature resistant thermosets having mechanical and chemical properties that are superior to the corresponding properties of thermosets composed of epoxy resins. Composites made using compounds referred to in this description as multifunctional maleimides (which are maleimides having at least two crosslinkable maleimide groups per molecule) have been described, for example, in U.S. Patents 4,654,007, 4,644,039 and 4,618,652.

One characteristic of the known thermosetting compositions is the high density of crosslinks resulting from addition polymerization and other crosslinking of the multifunctional maleimide. This high density of crosslinks presents certain problems, such as difficulty in curing of the temperature resistant composites, since high curing temperatures are needed to complete the crosslinking reactions. The resulting thermosets are susceptible to thermocracking during the curing operations and heating and cooling cycles. The brittleness of the resin matrix means that thermoset composites made from them and containing high strength filaments are excessively susceptible to damage.

Recently, efforts have been made to avoid such defects in thermoset composites made with multifunctional maleimides. For example, U.S. Patents 4,518,754 and 4,518,755 suggest the use of other unsaturated monomers in combination with the multifunctional maleimide, U.S. Patent 4,100,140 suggests copolymerization with certain alkenylphenols or dialkenyl-phenol ethers as reactive diluents, and U.S. Patent 4,413,107 suggests copolymerization with N-vinylpyrolidin-2-one and acrylamide. Other published approaches have included modifying the multifunctional maleimide itself (see U.S. Patent Application No. 761,432, of August 2, 1985), and the use of unsaturated oligomers in combination with multifunctional maleimide (see U.S. Patent 4,647,615).

According to the invention, a thermosetting resin composition comprising a multifunctional maleimide and a terminally unsaturated oligomer, is characterized in that the oligomer has a glass transition temperatures ($T_g$) above about 170° and is soluble in the uncured multifunctional maleimide.

Also according to the invention, a thermosetting resin composition comprises a mixture of the terminally unsaturated oligomer according to the invention and the multifunctional maleimide.

The thermosetting resin compositions, optionally with a reactive diluent, yield upon curing in the presence of inorganic or organic fibers, thermoset composites having dramatically improved damage tolerance, short beam shear strength, and thermocracking characteristics while retaining high temperature performance and solvent resistance. They in certain embodiments exhibit multiphase morphology in which two or more glassy phases of the cured resin are observable microscopically. In the preferred embodiments of this invention the thermosets have two or more glassy phases.

The thermosetting composition of this invention is prepared by mixing the terminally unsaturated oligomer accord ing to the invention and optionally a reactive diluent with a multifunctional maleimide having the formula,

(I)

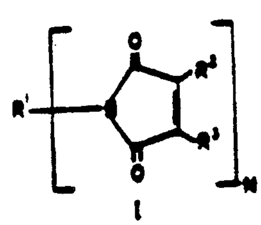

I

In formula I above $R^1$ is the residuum of an aryl, alkylaryl, or alkylamine or prepolymers thereof; $R^2$ is hydrogen, halogen, aryl, or lower alkyl group of from one to about ten carbon atoms; $R^3$ is hydrogen, halogen, aryl, or lower alkyl group of from one to about ten carbon atoms, and N is an integer of from 1 to about 10.

The terminally unsaturated oligomer is prepared by reacting a diamine or mixture thereof and a material

selected from a dianhydride, a diacid chloride, a diacid, an anhydride acid chloride, an anhydride acid or mixtures thereof. The resulting oligomer will have either terminal amine groups or terminal carboxylic acid derivative groups. Terminal amine groups on the oligomer result from employing a molar excess of a diamine in the reaction. Terminal carboxylic acid derivative groups result from employing a molar excess of the dicarboxylic acid derivative reactant in the reaction. Depending on the choice of dicarboxylic acid derivative chosen, imide, amide, or amideimide oligomers are produced. These intermediate oligomers are then reacted with an unsaturated organic compound containing pendant functional groups that are reactive with the terminal functional groups of the intermediate oligomer. This unsaturated organic compound is called a complementary unsaturated organic compound.

The preferred terminally unsaturated oligomers of this invention are characterized as being oligomers selected from the general formulae C-$(AB)_y$-AC and C-$(BA)_y$-BC where A is the residium of a diamine, B is the residium of a dicarboxylic acid derivative and C is the residium of the complementary unsaturated compound and y is from about 1 to about 60.

Diamines employed in preparing the terminally unsaturated oligomer are alkylaryl diamines having the formulas,

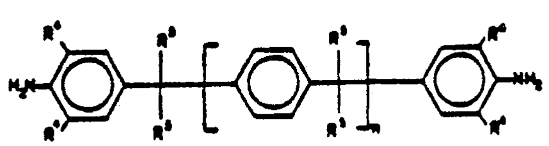

II

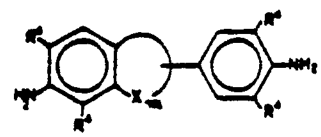

III

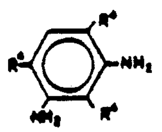

IV

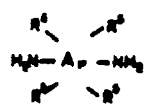

V

In formulas (II), (III), (IV) and (V) above $R^4$ is an alkyl, aryl, alkylaryl, halogen or hydrogen; $R^5$ is methyl or lower alkyl; n is 0 to 4; X is methylene and m is 3 to 6; Ar is an aryl or alkylaryl such as naphthalene, biphenyl, phenanthrene, 2,2-diphenyl hexafluoropropyl and the like, and $R^6$ is alkyl, aryl, arylalkyl, or halogen and the four $R^6$ groups are on adjacent carbon atoms to the two amine groups and such $R^6$ groups may be the same or different.

Dianhydrides; diacid chlorides or diacids; or acid anhydride acid chlorides or acid anhydride acids or mixtures thereof that can be used in preparing the terminally unsaturated oligomers are of the aryl or alkylaryl type and are well known in the art.

When a molar excess of diamine or mixture thereof is used in relation to the amount of (i) dianhydride; (ii) diacid chloride or diacid; (iii) acid anhydride acid chloride or acid or (iv) a mixture thereof, an intermediate oligomer having amine end groups results. The terminally unsaturated oligomer is prepared by reacting, generally in a second stage, the intermediate oligomer having terminal amine functional groups with a complementary unsaturated organic compound. The complementary unsaturated organic compound can be the residium of maleic anhydride or its halide or alkyl, alkylaryl, or aryl derivatives; an unsaturated alkyl halide in which case the complementary unsaturated organic compound can be the residium of two of the same or different unsaturated groups; an unsaturated acid chloride; an unsaturated phosphoric halide; an unsaturated isocyanate; or an unsaturated sulfonyl chloride. Other complementary unsaturated organic groups are known to one skilled in the art and the groups listed are not meant to be exhaustive but merely indicate the variety of end groups possible and indicate the preferred embodiments of the invention.

When the aforementioned (i) dianhydride, (ii) diacid chloride or diacid, (iii) or acid anhydride acid chloride or acid or (iv) mixture thereof is used in excess in relation to the aforementioned amine or mixtures thereof an intermediate oligomer with end groups comprising anhydride, acid chloride or acid groups or a mixture thereof results. One method by which the unsaturated oligomer is prepared is by reacting, simultaneously with the preparation of the intermediate oligomer having terminal carboxylic acid derivative end groups, said intermediate oligomer and a complementary unsaturated organic compound.

The complementary unsaturated organic compound may be the residium of an unsaturated primary or secondary amine, an unsaturated alcohol, or sulfide. If the carboxylic acid derivative terminal group of the intermediate oligomer is an anhydride and the complementary reactive organic group is a secondary amine,

an alcohol or a thioester the residium of the unsaturated reactive organic group is connected through an amide, ester, or thioester linkage. In this reaction the anhydride group reacts to form either (i) a diester, diamide or dithioester thus having two unsaturated complementary groups reacted per anhydride unit or (ii) an ester, amide, or thioester having one unsaturated complementary group reacted per anhydride and a residual unreacted acid group at the terminal site of the terminally unsaturated oligomer. The terminally unsaturated group is likely to be attached through an imide linkage when the acidic end group of the intermediate oligomer is an anhydride and the complementary reactive organic group is the residium of an unsaturated primary amine. Other complementary unsaturated reactive groups are known to one skilled in the art and the terminal groups listed here are not meant to be exhaustive but to merely indicate the preferred embodiments of the invention. Generally in this case the intermediate oligomer is prepared in a one step process in which the complementary organic reactive group is added to the reaction while the intermediate oligomer is being formed, although the reaction may be carried out in sequential steps, if desired.

The thus resulting terminally unsaturated, soluble imide, amide or amideimide oligomers prepared by either of the two methods shown above have glass transition temperatures ($T_g$) of from about 200°C and are soluble in combination with the multifunctional maleimide. The preferable $T_g$ of the terminally unsaturated oligomer will depend on the particular application intended, but when the oligomer is used in carbon fiber composites for high temperature applications, the preferred $T_g$ about 225° or higher. The number average molecular weight of the terminally unsaturated oligomers employed in preparing the thermosetting compositions of this invention are from about 2000 to 60,000. The preferred molecular weight will depend on the application, but when the oligomers are used in carbon fiber composites, the preferred molecular weight is about 5000 to about 10,000.

In certain cases especially when hot melt processes are used to prepare prepregs comprising the thermosetting compositions and fiber reinforcements as described in this application, it is desirable to use an unsaturated reactive diluent along with the multifunctional maleimide and terminally unsaturated oligomer to aid in solubility of the terminally unsaturated oligomer, and processing of the prepreg. The unsaturated reactive diluents useful in this invention include materials such as methylpentadiene, divinylbenzene, acrylates, eugenol, and the like and preferably materials described by structures (VI) and (VII)

(VI)

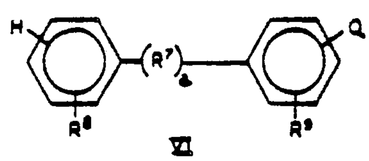

VI

where $R^7$ represents one of the radicals $-CH_2-$,

$$-\underset{CH_3}{\overset{CH_3}{\underset{|}{\overset{|}{C}}}}-,$$

$-SO_2-$, $-SO-$, $-S-$ and $-O-$; a is 0 to 1; and H and Q are $-OH$, $-NH_2$, $-SH$, or hydrogen, and are the same or different and $R^8$ and $R^9$ are unsaturated alkyl groups having one to eight carbon atoms in the molecule and may be the same or different.

(VII)

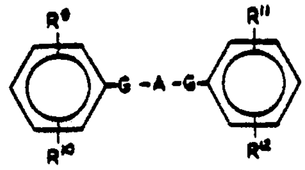

VII

where $R^9$ and $R^{11}$ are unsaturated alkyl or aryl groups and may be the same or different, $R^{10}$ and $R^{12}$ are hydrogen, or alkyl or aryl ether groups and G is -O- or -S- or -NH-, and A is the residium of a dihalide.

The thermosetting compositions of this invention can be applied to the fibers, tows, whiskers, woven fabric or particulate filler by a number of techniques. The two most desirable are hot melt coating and solvent coating techniques. The resulting uncured materials are prepregs. The prepregs are arranged into desired shapes and cured to form composite structures.

The thermosetting resin compositions of this invention are prepared by mixing about 10 to about 80 weight percent of terminally unsaturated oligomer or mixture thereof, preferably about 15 to about 50 weight percent, and about 20 to about 90 percent of a multifunctional maleimide or mixture thereof, preferably about 30 to about 50 weight percent and about 0 to about 60 weight percent, preferably about 20 to about 35 weight percent of an unsaturated reactive diluent or mixture thereof. The mixture is blended by stirring the components to give a paste, liquid, or in certain cases a solvent solution. If a solvent is used, the mixture is generally about 50 weight percent solids comprising the said preferable range of ingredients and the solvent is preferably methylene chloride, methylethylketone, tetrahydrofuran, diethylether, or other low boiling common organic solvents. If the blend is a paste, the paste is characterized by being a compatible blend of all ingredients, with the reactive oligomer at the time of application not necessarily completely dissolved in the blend.

The multifunctional maleimides useful in this invention are well known in the art and are described in US patents 4,389,516, 4,298,720, 4,035,345, 4,100,140. Briefly, the polyfunctional maleimides useful in this invention are prepared by reacting a maleic acid or anhydride with a polyamine having at least two amino groups to prepare a polymaleimide acid and then dehydrocyclizing the polymaleimide acid. Any multifunctional maleimide may be used in this invention, either alone or in combination with other multifunctional maleimides. These are described by formula (I) above. Preferable multifunctional maleimides that are particularly suited to the terminally unsaturated oligomers of this invention are benzene bismaleimide, p-diphenylmethanebismaleimide, phenylenediamine bismaleimide, 2,4-tolylenediaminebismaleimide, TECHNOCHEMIE 353, 795, 751 (commercial trade names for mixture of amino maleimides, bismaleimide, and chain extended maleimides reference Polymer Journal 1983, 15, p. 2) and diaminodiphenylsulfone bismaleimide.

The reactive imide, amide or amideimide terminally unsaturated oligomers of this invention are prepared by procedures generally known by one skilled in the art. Briefly, these oligomers are made in a one step or two step process. Imide, amide or amideimide terminally unsaturated oligomer are prepared from specific amines, and anhydride, acid, acid chloride or anhydrideacid chloride or acids by choosing the proper mole ratio and mixing the diamine or mixture thereof with dianhydride; diacid chloride or diacid; or anhydrideacid chloride or acid or mixture thereof. The resulting intermediate oligomer is then reacted with the desired olefin that contains the desired necessary complementary organic functional group that subsequently reacts in a high temperature curing reaction by free radical, Michael, "ene", or Diels-Alder reactions. In the case where the intermediate oligomer has end groups comprising anhydride, acid, acid chloride, or a combination thereof and the complementary unsaturated organic compound is an unsaturated amine, it is preferable to add the complementary unsaturated amine capping agent to the intermediate oligomer mixture while it is being formed. In the case where the intermediate oligomer has amine end groups and the selected complementary unsaturated organic compound is an unsaturated acid chloride, halide, sulfonyl chloride, isocyanate, and the like, it is preferable to prepare the oligomer and then add the unsaturated capping agent and continue the reaction to completion.

In the preferred embodiments of this invention, when said oligomer is an imide oligomer the dianhydride is chosen so that at least 30 mole percent of one or more of the following dianhydrides is incorporated into the backbone of the imide oligomer: 3,3′,4,4′-benzophenonetetracarboxylic acid dianhydride, 2,2-bis(3,4-benzene dicarboxylic acid anhydride) perfluoropropane; 2,2-bis (3,4-dicarboxyphenyl)-

propane dianhydride, bis(3,4-dicarboxylphenyl)ether dianhydride, 4,8-dimethyl-1,2,3,5,6,7-hexahydronaphthalene-1,2,5,6-tetracarboxylic acid dianhydride, 2,2-bis(2,3-dicarboxylphenyl) propane dianhydride, 1,1-bis(2,3-dicarboxylphenyl)ethane dianhydride, 1,1-bis(3,4-dicarboxyphenyl)ethane dianhydride, bis(2,3-dicarboxylphenyl)methane dianhydride, bis(3,4-dicarboxylphenyl)methane dianhydride, 5-(2,5-dioxotetrahydro-3-furanyl-3-cyclohexene-1,2-dicarboxylicanhydride. The type of anhydride that can be used in combination with the already mentioned anhydrides are: pyromellitic dianhydride, 2,3,6,7-naphthalene tetracarboxylic acid dianhydride, 1,2,5,6-naphthalene tetracarboxylic acid dianhydride, 2,2′3,3′-diphenyltetracarboxylic acid dianhydride, 3,4,9,10-perylenetetracarboxylic acid dianhydride, naphthalene-1,2,4,5-tetracarboxylic acid dianhydride, naphthalene-3,4,5,8-tetraboxylic acid dianhydride and 3,3′,4,4′-diphenyltetracarboxylic acid dianhydride. These lists are not meant to be limiting of the anhydrides that are useful in this invention but to indicate the preferred embodiments of this invention.

In the preferred embodiments of this invention, when the oligomer is an amide the acids or acid chlorides that are preferred are: isophthaloyl dichloride, terephthaloyl dichloride, phthaloyl dichloride, naphthaloyl dichlorides, anthraloyl dichlorides, pyridine dicarboxylic acid dichloride, biphenyl oyl dichlorides, isophthalic acid, terephthalic acid, phthalic acid, naphthoic dicarboxylic acids, anthralic dicarboxylic acids, pyridine dicarboxylic acids, biphenyl dicarboxylic acids, stilbene dicarboxylic acids, diphenylsulfone dicarboxylic acids, diphenylether dicarboxylic acids, diphenylsulfidedicarboxylic acids, azodiphenyldicarboxylic acids, 2,2-diphenylhexafluoropropane dicarboxylic acids.

In the preferred embodiments of this invention when the oligomer is an amideimide the preferred anhydride acid chloride is trimellitic acid anhydride acid chloride and the preferred dianhydrides, diacids or diacid chlorides can be chosen from those already mentioned as preferred materials.

The diamines that are preferred for the incorporation into the polyimide, amide, and amideimide oligomers of this invention are represented by the materials of formulas II, III, IV and V above.

The most preferable diamine is p-bis(4-isopropylidene 2,6-dimethylaniline)benzene. Preferable diamines are 4,4′-isopropylidene di-2,6-xylidene, 4,4′-p-phenylene-diisopropylidene dianiline, 1-(4-aminophenyl)-2,3-dihydro)-1,3,3-trimethyl-1H-indenamine, and 2,4-diaminomesitylene. This list is not meant to be all encompassing of the diamines useful in this invention but to demonstrate those materials that are preferred in this invention. In addition, it is known that isocyanates can replace the amine in reaction with dianhydrides to give imides that would have structures identical to those described herein. The amine reaction described here is shown to provide the preferred process of preparing the oligomers of this invention.

When a molar excess of diamine or mixture thereof to dianhydride; diacid chloride or diacid; anhydride acid chloride or acid or dianhydride or (mixture) thereof is reacted, an oligomer containing amine end groups is first formed and the preferable complementary reactive functional group of the reactive olefin can be an alkyl halide, acid chloride, phosphoric halide, isocyanate or sulfonyl chloride.

Preferable unsaturated alkyl halides are allyl chloride or bromide, propargyl chloride, 1-chloro-3-butene, 1-chloro, 3,5 hexadiene (an unsaturated conjugated diene), chloromethylvinylbenzene, chlorocyclopentadiene, and cinnamoyl chloride. Preferable unsaturated acid chlorides are acryloyl chloride, methacryloyl chloride, sorboyl chloride (an unsaturated conjugated diene), vinyl benzoyl chloride, and cinnamoyl chloride. Other useful unsaturated conjugated diene acid chlorides are 3-methylbutadiene carboxylic acid chloride and 4-phenylbutadiene carboxylic acid chloride. Preferable unsaturated phosphonic halides are methyltrivinylphosphonium iodide, 2-methylallyltriphenylphosphonium chloride, vinylphosphonic dichloride, triethylvinylphosphonium bromide. Preferable unsaturated isocyanates are isocyanatoethylacrylate or methacrylate, allyl isocyanate, 3,5 hexadienylisocyanate (an unsaturated conjugated diene), benzene, 1-isocyanato-2-(m-isopropenyl-phenyl) propane 2-isopropenylphenylisocyanate. A preferable unsaturated sulfonyl chloride is vinylsulfonylchloride.

When a molar excess of dianhydride; diacid or diacid chloride; or anhydride acid chloride or dianhydride diacid cloride or diacid to diamine is reacted, an oligomer containing anhydride, acid, acid chloride, or anhydride acid chloride or acid end groups is initially formed and the preferred complementary reactive functional group of the reactive olefin can be a primary or secondary amine, an alcohol, or a sulfide. It is preferred that when the reactive functional group is a primary amine, the unsaturated reactive olefin be added at the start of the oligomer preparation. Preferred amine capping agents are allyl amine, isopropenylaniline, m-allyloxyphenylaniline, aminofuran, (2-aminopropyl)isopropenylbenzene 2-propylaminophenol. Preferable alcohols are hydroxystyrene, allyl alcohol, sorbic alcohol (an unsaturated conjugated diene). Preferable sulfides are vinyl sulfide, alkylsulfide. Especially preferable are the oligomers that have isopropenyl aniline alloxyphenylaniline, sorbic acid, sorbic alcohol, or maleimide end groups. These preferable unsaturated materials are not mentioned to limit the invention but to give exemplary materials to the preferred embodiments of the invention.

The reactive diluents useful in this invention are selected from a wide variety of unsaturated organic

compounds and have one or more reactive unsaturated groups that react by a free radical, "ene", Diels-Alder, or Michael addition with the multifunctional maleimide and unsaturated, soluble imide oligomer. The reactive diluents must be soluble in the mixture of multifunctional maleimide and terminally unsaturated oligomer described herein. Some of the materials useful in this invention and used in polyimide systems are disclosed in US 4,463,147, 4,100,140, 4,035,345, 4,298,720, 4,351,932. Other materials that are useful are well known in the art such as, for example, eugenol, divinylbenzene, methacrylates or acrylates, and 1,3-pentadiene. Still others are described by formula (VI) and (VII) above. The unsaturated reactive diluents can be used either alone or as mixtures in combination with the multifunctional maleimides and unsaturated reactive oligomers of this invention. Particularly useful diluents of this invention are diallylbenzene, eugenol, isoeugenol, 1,3-pentadiene, 2-allylphenol, 2-propenylphenol, 4-biseugen-oxybutane, 1,3-biseugenoxypropane, α, α-bis(o-allylphenoxy)-p-xylene, α, α-bis eugenoxy-p-xylene, and allylphenylether. Most preferable reactive diluents are 2,2-bis(3-alkenyl-4-hydroxyphenyl) propane, α, α-bis(opropenylphenoxy)-m-xylene,α,α-bis(o-propenylphenoxy)p-xylene, 4,4′-bis(o-propenylphenoxy)diphenylsulfone.

1. Hot Melt Coating Application. The thermosetting resin compositions for use in hot melt coating applications are prepared by dissolving about 10 to about 80 weight percent, preferably about 10 to about 50 weight percent of a terminally unsaturated oligomer in about 20 to 85 weight percent, preferably about 30 to 50 weight percent of the multifunctional maleimide and about 0 to 60 weight percent, preferably about 20 to about 35 weight percent of a reactive diluent. The resulting paste or solution is then heated to 60-100 °C for coating purposes. 2. Solution Coating Application. The thermosetting resin compositions for use in solution coating applications are prepared by dissolving the above mentioned ingredients in the proportions described in a low boiling, common organic solvent such as methylene chloride, acetone, methyl ethyl ketone, 1,1,1 tetrahydrofuran, or the like at about a 50% solids level. The solution is then applied to the fabric, fiber, or filler and the solvent evaporated. 3. Prepreg Formation. The prepregs of this invention comprise about 20 to about 50 weight percent, preferably about 25 to about 40 weight percent, of the thermosetting compositions herein described and about 50 to about 80 weight percent, preferably about 60 to about 75 weight percent of a high strength fiber such as glass, boron, or carbon, or filler such as cellulose, silica, and the like, that are coated with the thermosetting compositions as a hot melt or solution using processing conditions known in the art.

A preferred manner of making the prepregs of this invention when the fiber is carbon fiber is by hot melt coating. This coating method is characterized by impregnating bands of fabrics of continuous fiber with the thermosetting composition in molten form. Generally for hot melt processing it is preferred to have a paste that becomes a liquid at about 60 to about 100 °C and has a viscosity of about 10,000 to about 100,000 centipoises (cps), more preferably between about 30,000 and about 70,000 cps at 100 °C.

A preferred method of making the prepregs of this invention when the fibrous material is a glass fabric of woven nature is by solvent coating. In this process the glass woven fabric is passed through a solution of the thermosetting composition in a common organic solvent such as 1,1,1 trichloroethane, methylene chloride, tetrahydrofuran, methyl ethyl ketone or the like at about 50 weight percent solids and a viscosity of about 100 to about 1000 cps. The coated fiber is then passed through an oven at preferably about 150 to about 200 °C for a residence time of two to three minutes to remove the solvent. The resulting coated fiber is used to make composites.

Other processing techniques can be used to form the prepregs of this invention. For example, filament winding, solvent coating, and pultrusion are typical processing techniques in which the thermosetting compositions of this invention can be used. When the fibers exist as bundles or when particulate fillers are used, the fibers or fillers can be coated with the thermosetting compositions, and layed up by filament winding or formed in a mold or be pressed into a sheet depending on the particular end use application.

The composites of this invention are prepared by stacking layer upon layer of the fiber prepregs where applicable, or by placing the coated filler or fiber in a mold. In the case where the fiber is carbon fiber, the layup is preferably cured at 180 °C for two hours under vacuum at about 80 psi, then at 230 °C for two hours under free standing conditions, then at 250 °C for five hours under free standing conditions. The resulting composites have a $T_g$ greater than 200 °, have excellent toughness, that is a $K_{IC}$ of greater than 1, have a post impact compression (PIC) value higher than 20 Ksi at 1000 lbs impact level and have good solvent resistance. When the fiber is glass, the layup is preferably cured at about 175 °C under about 40 to about 80 Ksi pressure with or without the presence of vacuum, then at about 220 °C to about 240 °C for 4 to 6 hours under free standing conditions.

The prefered thermosetting compositions are comprised of compositions that, when cured, produce resinous systems that are characterized by multiphase morphology comprising at least two glassy phases at least one of which is a discontinuous phase and one a continuous phase. Further, in the preferable embodiments of this invention the continuous phase comprises about 15 to about 30 percent of the volume

of the cured composition and constitutes the majority of the reactive oligomer. The domains of the dispersed discontinuous phase are preferably between about one half to about four microns and more preferably between two to three microns. The domains are generally spherical or ellipsoidal in shape. The presence of fiber does not alter the formation of the phases. The cured resins are insoluble at room temperature in conventional solvents such as jet fuel, hydraulic fuel, acetonitrile, acetone, toluene, methylene chloride, water and the like.

The preferred crosslinked thermosetting composition of this invention when carbon fiber is the fiber of choice are also characterized by a $T_g$ of at least 150°C and preferably above 200°C and a fracture toughness of at least 0.8 $MPam^{1/2}$ (where MPa is megapascals and m is meters). The most preferred crosslinked resins for this application have a fracture toughness of 1.0 $MPam^{1/2}$ or greater and a cohesive fracture energy, $G_{IC}$ of at least 200 $j/m^2$ (where J is joules and m is meters). The preferred composites when the fiber is carbon fiber have a post impact compression (PIC) at an impact energy of 1500 inch-pounds per inch thickness of at least about 20 and more preferably at least about 30 ksi, as determined according to NASA publication 1092, using 32 ply quasiisotropic laminates.

The following test procedures were employed in determining fracture energies ($G_{IC}$) and critical stress intensity factors ($K_{IC}$) of the cured resins produced from the compositions of this invention. The mechanical strength of the cured resins was quantified in terms of the mode I cohesive fracture energy, $G_{IC}$ in $j/m^2$ or the mode I critical stress intensity factor, $K_{IC}$ in megapascals (MPa) times meters (m) to the one half power ($MPam^{1/2}$). The two are related through the following well known relationship which may be found in Fundamentals of Fracture Mechanics by J.F. Knott, Buttersworth, London (1973).

$$K_{IC} = (G_{IC}E)^{1/2}$$

where E is Young's modulus, determined in accordance with ASTM D638. $G_{IC}$ or $K_{IC}$ can be quantified via numerous test methods such as compact tension, double cantilever beam, double torsion and single edge notch. The cured resins were tested herein using a double torsion fraction test as described in Fracture of Engineering Brittle Materials, Ayal de S. Jayatilaka, Applied Science Publishers Ltd., London (1979).

In carrying out the test, the resin was cast in a 0.125 inch thick panel and the panel milled to yield a number of 1.75 inch by 5 inch by 0.125 inch rectangular bars. A 45 degree diamond-coated saw blade was used to cut a 0.042 inch deep groove down the center of the rectangular bar on both sides. At 0.75 inch from one end, the groove depth on both sides is gradually increased such that the remaining thickness at that end in the center of the grooves is near zero. A pre-crack about 0.75 inch long from the near zero thickness edge is formed by wedging a sharp razor blade into the groove at the end where the thickness between the grooves ($T_c$) is near zero. This specimen is called a double torsion bar.

The double torsion bar sample is placed into a screw driven INSTRON® equipped with a compression load cell and a bottom compression platen. The double torsion bar rests on two rollers on the compression platen with the length axis of the bar parallel to the rollers. The bar is positioned such that the groove is equidistant from the rollers and that the front end is the end with the near zero remaining thickness. The rollers lay in small depressions in the platen and raise the sample by about 0.15 to 0.2 inch above the platen thus allowing the bar to deform in torsion.

The bar is loaded by the downward motion of the crosshead at a rate of 0.05 inch per min. The loading spheres of the INSTRON® hit the top bar surface about 0.25 inch from the front end of the bar. The $P_{IC}$, critical crack propagation load is obtained from the load/time plateau resulting from the load-deflection curve. $K_{IC}$ is calculated by the formula

$$K_{IC} = \sqrt{\frac{3P_{IC}^2 M^2 (I + v)}{T_C T^3 W}}$$

where M is the momentum of the torsion that is one-half the distance between the rollers, v is Poisson's ration which is about 0.35, W is the width of the double torsion bar, T is the double torsion bar thickness, $T_c$ is the thickness of the bar between the center line groove but outside the pre-crack region.

At least three tests were made and the sample mean and standard deviation determined. $G_{IC}$ was then calculated using the previously shown relationship between $G_{IC}$ and $K_{IC}$. The modulus, E was calculated from the shear storage modulus, $G'(\omega)$ assuming Poisson's ratio to be 0.35. $G'(\omega)$ was determined at $\omega = 10$ rad/sec and about 22°C with a Rheometrics Mechanical Spectrometer and is reported in gigapascals(GPa).

To observe the glassy phases of the cured resins and composites prepared using the thermosetting compositions of this invention, carbon fiber composite and neat cured resin samples were thin sectioned at room temperature using a diamond knife. Thin sections (0.6 - 0.8 micron thick) were stained with $RuO_4$ vapor for four minutes before being examined by a transmission electron microscopy (TEM) to determine morphology.

The procedure used for preparing the sections for transmission electron microscopy examination follows. A sample of the cured resin or composite cut to about a 2 x 2 x 10-mm size was placed in a metal chuck and attached to a microtomer (LBK Ultratome V). The sample was prepared for microtoming by first trimming the area to be thin sectioned into the form of a trapezoid using a glass knife. The trapezoidal shaped blockface was less than one millimeter in diameter. The glass knife was replaced with a diamond knife (Sorvall-DuPont) and the trough attached to it was filled with distilled water. As the thin sections (600 to 800 angstroms) were cut, they were floated in a ribbon pattern on the water surface. The sections were picked up using 300-mesh copper grids and allowed to air-dry. The grids containing the thin sections were attached to a glass microscope slide and placed in a staining dish containing 2% aqueous $RuO_4$ (Aesar) for 4 minutes. The glass slide was removed from the staining dish and the slide was placed under a hood to remove the last traces of any $RuO_4$. The stained microtomed sections were examined using a Zeiss EM-10 transmission microscope at 60 KV and electron photomicrographs were taken at 2000X and 5000X, and then enlarged to 6000X and 15,000X, respectively.

The glass transition temperature, dry modulus, and wet modulus values of neat cured resin and carbon fiber composite samples were obtained using a Rheometrics Dynamic Spectrometer (RDS). All measurements were made in the temperature sweep mode at a frequency of 10 rad/sec. The strain applied to the torsional rectangular test samples (2.5" x 0.5" x 0.0125") was kept within 0.2% to insure that the measurements were in the linear viscoelastic range. The intersection of the tangents of the slopes of the storage modulus ($G'$) curve obtained from the RD'S was defined as the glass transition temperature (Tg) of the sample. Using the above procedures, a distinct Tg for each phase of the cured resin is not observed in those cases where the separate phases have Tg's within about 15°C of each other.

The following examples illustrate this invention but are not meant to limit the scope of the invention. In these examples, unless stated otherwise, all parts and percentages are parts and percentages by weight. Molecular weight ($M_n$) values were calculated from end group analysis using the formula $M_n$ = 2000/meq, where meq equals total milliequivalents of end groups by analysis, unless otherwise indicated.

In the Examples that follow the reagents and solvents used were as described below:

p-Bis (4-isopropylidene-2,6-dimethylaniline) benzene (EPON HPT 1062):

Purchased from Shell Chemical Co. and recrystallized from ethanol at a concentration of 100 parts of the amine to 1000 parts of ethanol.

3,3′,4,4′-Benzophenonetetracarboxylic dianhydride (BTDA):

Purchased from Allco; was used as received and said to be 99% purity.

2-Isopropenylaniline:

Purchased from Aldrich Chemical Co.; used as received and said to be 98 plus percent pure.

2-Methoxyethyl ether (diglyme):

Purchased from Aldrich Chemical Co. and dried over 3A molecular sieves.

Toluene:

Technical grade toluene was stored over 3A molecular sieve.

Methanol:

Technical grade methanol was used as received.

Methylene chloride:

Technical grade methylene chloride was dried over 3A molecular sieve before use.

Nitrogen:

Nitrogen gas was passed through a 3A molecular sieve and Ridox column before use.

1-Methyl-2-pyrrolidinone (NMP):

Spectrophotometric grade was dried over 3A molecular sieve before use.

In the Examples, "SEC" means size exclusion chromatography, "conc" means concentration, "DSC" means differential scanning calorimetry, $M_n$ is number average molecular weight, $M_w$ is weight average molecular weight, $M_Z$ is Z average molecular weight and $P_l$ molecular weight distribution.

Example 1

A mixture of p-bis-(4-isopropylidene-2,6-dimethylaniline) benzene (1085 g, 2.713 mol), 2-isopropenylaniline (119.35 g, 0.9 mol) and diglyme (5800 cc) was sparged with nitrogen for thirty minutes in a twelve liter flask equipped with a mechanical stirrer, two Dean-Stark traps and two condensers and a nitrogen bubbler. To this solution was added BTDA (1020 g, 3.17 mol) and diglyme (200cc). The reaction was stirred at room temperature for four hours. Toluene (1000 cc) was added and the contents azeotroped overnight. The oligomer was precipitated and coagulated in methanol to give a pale yellow solid. The solid was filtered, washed, and dried in a vacuum oven at 90 °C overnight and then dried at l20 °C one more day. The oligomer obtained (2004 g, 96% yield) had a $T_g$ (DSC) of 244 °C; $NH_2$ (conc) of 0.05 meq/g; COOH (conc) of 0.13 meq/g; $M_n$ of 2.69 x $10^3$; $M_w$ of 1.38 x $10^4$; $M_z$ of 2.5 x $10^4$; $P_l$ of 5.12.

Example 2

A solution of p-bis-(4-isopropylidene-2,6-dimethylaniline) benzene (500 g, 1.25 mol) in diglyme (1500 cc) and N-methylpyrridone (Aldrich) (1000 cc) was added to a five liter flask equipped with a mechanical stirrer, a Dean-Stark trap and a condenser. The solution was stirred at room temperature for 50 min. under nitrogen. A solution of BTDA 1345 g, 1.071 mol) in 500 cc of N-methylpyrridone was added to the reaction solution. This was stirred at room temperature for three hours. Toluene (500 cc) was added and the mixture was azeotroped overnight. The reaction was cooled to 40 °C and pyridine (50 cc) and sorboyl chloride (60 g, 0.46 mole, 29% excess prepared by adding 1.03 equivalents of oxalyl chloride dropwise to a slurry of potassium sorbate in an inert solvent such as hexane, benzene, methylene chloride, etc. at 5-15 °C under anhydrous conditions, filtering the formed potassium salt, and distilling the sorboyl chloride at 110 °C at 40 mm Hg to give a 70-90% yield) were added to the reaction. This was stirred at 100 °C for 3 days. The oligomer was coagulated in methanol to give a beige solid. The solid was filtered, washed, and dried in the vacuum oven at 90 °C overnight and at 140 °C for 6 hours. The oligomer (814 g, 96% yield) had a $T_g$(DSC) of 256 °C; a $NH_2$ (conc) of less than 0.01 meq/g; a COOH (conc) of 0.02 meq/g; and a NMR (wt% olefinic hydrogen) of 0.20%.

Example 3

A solution of p-bis-(4-isopropylidene-2,6-dimethylaniline) benzene (500 g, 1.25 mol) in diglyme (1500 cc and n-methylpyrridone (1000 cc) was added to a five liter flask fitted with a mechanical stirrer, a Dean-Stark trap and a condenser. The solution was sparged and stirred at room temperature for thirty minutes. A solution of BTDA (345 g, 1.07 mol) and diglyme (500 cc) was added and the reaction was stirred at 35-40 °C for two hours. Toluene was added and the contents were azeotroped overnight. The solution was cooled to 75 °C and pyridine (70 cc) and sorboyl chloride (51 g, 0.39 mole, 10% excess) was added. The solution was stirred at 60-70 ° for two hours. The solution was diluted with toluene (solution/toluene ratio was 2/1) before coagulating in methanol to give a pale yellow solid. The solid was filtered, washed with methanol and dried in a vacuum oven at 100 °C overnight and at 150 °C for two hours. The oligomer (784 g, 88% yield) had a $NH_2$ (conc) of 0.01 meq/g; a COOH (conc) of 0.05 meq/g a $M_n$ of $6.65 \times 10^3$; a $M_w$ of $1.67 \times 10^4$; a $M_z$ of $2.86 \times 10^4$; and a $P_I$ of 2.51.

## Example 4

A solution of p-bis-(4-isopropylidene-2,6-dimethylaniline) benzene (100 g, 0.25 mole) in diglyme (500 cc) and triethylamine (32 cc) was added to a two liter round bottom flask fitted with a mechanical stirrer, a Dean-Stark trap, a condenser and a nitrogen inlet-outlet tube. To this solution was added trimellitic anhydride (46.8 g) in several portions and then N-methylpyrolidone (300 cc) was added. After three hours at 45-50 °C, toluene (100 cc) was added and the contents heated to the boiling point overnight under azeotroping conditions. The reaction was cooled to 65 °C and pyridine (10 cc) and sorboyl chloride (8 g) were added to the reaction mixture. After two hours the reaction mixture was coagulated in methanol (one part reaction mixture to five parts methanol). The fine solid was collected by filtration. The solid was washed five times with methanol and dried in a vacuum oven at 140 °C to give a powder (120 g, 90% yield). The oligomer had a $T_g$ of 250 °C; a $NH_2$ (conc) of 0.23 meq/g; and a COOH (conc) of 0.1 meq/g.

## Example 5

A solution of p-bis-(4-isopropylidene-2,6-dimethylaniline) benzene (30 g, 0.075 mole) in N-methylpyrridone (400 cc) and 30 cc of triethylamine was added to a one liter round bottom flask fitted with a mechanical stirrer. To this mixture isophthaloyl dichloride (13.8 g, 0.068 mole) was added in portions at such a rate that the reaction temperature did not exceed 40 °C. After three hours, two grams of sorboyl chloride were added and the contents were stirred for another hour. The contents of the flask were coagulated in methanol (one part reaction mixture to five parts methanol). The solid was collected by filtration, washed with methanol, and dried under vacuum at 100 °C to give 39 g (98% yield). The polymer had a $T_g$ of 253 °C.

## Examples 6-20

The polymers described in the previous Examples were used to make reactive oligomeric compositions and composites of high strength. The compositions and physical property data for the resulting composites are shown in Tables 1, 2 and 3. For these Examples the oligomer was dissolved in the bismaleimide/reactive diluent mixture at about 60 to about 100 °C and coated onto Hercules Magnamite® IM-7 carbon fiber using a prepreg machine so that the fiber constituted about 60 to about 70 volume percent and the oligomer/reactive mixture constituted about 30 to about 40 volume percent of the prepreg. The individual coated carbon fiber layers were then layed up and cured by conventional vacuum bag techniques at 180 °C for two hours, 230 °C for two hours, and 250 °C for 5 hours at 80 psi.

TABLE 1

| EXAMPLES 6-11[4] | | | | | | |
|---|---|---|---|---|---|---|
| Prepreg Sample[1] | Example 6 | Example 7 | Example 8 | Example 9 | Example 10 | Example 11 |
| % Oligomer | 25% Example 1 | 20% Example 1 | 15% Example 1 | 14.4% Example 1 | 12.7% Example 1 | 13.1% Example 1 |
| Reactive Diluent/Multifunctional-maleimide | 75%[2] | 80%[2] | 85%[2] | 85.6[2] | 87.3[3] | 86.9[3] |
| Tack After Prepregging | No | No | Yes | Yes | Marginal | Marginal |
| Tg, °C Cured Composite | 243 | 249 | 253 | 248 | 255 | 237 |
| PIC (Avg) Ksi (at 1500 lbs-in/in$^2$) | 30.9 | 26 | 28 | 23.2 | 23.6 | 24.9 |
| 0° Flex Strength Ksi | | | | | | |
| RT | 267 | 292 | 273 | 286 | 244 | 270 |
| 375°F | 174 | 182 | 187 | 172 | 162 | 177 |
| 0° Flex Modulus, MSI | | | | | | |
| RT | 21 | 23 | 21.3 | 22.5 | 20.8 | 20 |
| 375°F | 22 | 22 | 21.7 | 21.9 | 20.3 | 20 |
| Short Beam Shear, Ksi | | | | | | |
| RT | 18.7 | 18.3 | 19.1 | 14 | 16.7 | 16.8 |
| 375° Dry | 9.8 | 10.3 | 9.9 | 8.6 | 9.1 | 9.1 |
| 375° Wet | 7.0 | 6.8 | 6.7 | 6.0 | 6.5 | 6.3 |
| $T_g$ | 243 | | 253 | | | |
| $K_{IC}$ | 1.4 | | 1.1 | | | |

[1] Prepreg prepared with 70% carbon fiber and 30% mixture of oligomer, reactive diluent, and multifunctional-maleimide mixture.
[2] 1:1 molar mixture of benzenebismaleimide and bis 2,2(3 alkenyl-4-hydroxyphenyl) propane.
[3] 54/46% molar mixture of 2,2 (alkenyl-4-hydroxyphenyl) propane and p-diphenylmethanebismaleimide respectively.
[4] All examples in this table exhibit phase separated morphology.

TABLE 2

| EXAMPLES 12-15[3] | | | | |
|---|---|---|---|---|
| Prepreg Sample | Example 12 | Example 13 | Example 14 | Example 15 |
| % Oligomer | 15% Example 3 | 20% Example 3 | 25% Example 3 | 15% Example 3 |
| Reactive Diluent To Multifunctional-maleimide | 85%[1] | 80%[2] | 75% | 85%[2] |
| $T_g$, °C Cured Composite | 244 | 237 | 242 | 261 |
| $K_{IC}$ | 1.3 | - | - | 1.0 |
| Tack | Good | Poor | Poor | Fair |

[1] 1:1 molar mixture of benzenebismaleimide and 2,2-bis(3-alkenyl-4-hydroxyphenyl)propane.

[2] 1.16/1 molar mixture of p-diphenylmethanebismaleimide and 2,2-bis(3-alkenyl-4-hydroxyphenyl)propane.

[3] All examples in this table exhibit phase separated morphology.

TABLE 3

| EXAMPLES 16-20[5] | | | | | |
|---|---|---|---|---|---|
| Prepreg Sample | Example 16 | Example 17 | Example 18 | Example 19 | Example 20 |
| % Oligomer | 15% Example 3 | 15% Example 3 | 15% Example 2 | 15% Example 4 | 15% Example 5 |
| Reactive Diluent To Multifunctional-maleimide | 85%[1] | 85%[2] | 85%[3] | 85%[4] | 85%[4] |
| $T_g$, °C Cured Composite | 212 | 218 | 205 | 250 | 225 |
| $K_{IC}$ | - | - | 1.4 | 1.3 | 1.1 |
| Tack | Excellent | Good | Good | Good | Good |

[1] 0.88/1 molar mixture of benzenebismaleimide to diallylbenzene.
[2] 1:1 mole mixture of p-diphenylmethanebismaleimide and diallybenzene.
[3] 0.94/1 molar mixture of benzenebismaleimide to mixture of 57 weight % 2,2-(3-alkenyl-4-hydroxyphenyl)-propane and 43% diallylbenzene.
[4] 1:1 molar ratio of benzenebismaleimide and 2,2-(3-alkenyl-4-hydroxyphenyl)propane.
[5] All examples in this table exhibit phase separated morphology.

Example 21

A reactive imide oligomer was made as described in Example 3 on a 100 lb. scale. Fifteen (15) weight percent of this material was added to a mixture of 39.5% phenylenebismaleimide and 54.5% 2,2-bis(3-alkenyl-4-hydroxyphenyl)propane (a 1:1 mole ratio). The reactive imide oligomer was dissolved in the bismaleimide/reactive diluent mixture at 60° C and coated onto carbon fiber using a prepreg machine so that the fiber constituted about 60 to about 70 volume percent and the oligomer/reactive mixture constituted about 30 to about 40 volume percent of the prepreg. At the same time a 1:1 molar mixture of phenylenebismaleimide and 2,2-bis(3-alkenyl-4-hydroxyphenyl)propane without oligomer was coated onto a fabric in the same monomer as the oligomer composition. The individual coated Hercules Magnamite® IM-7 carbon fiber layers of each material were then layed up using 32 ply quasiisotropic laminates. The laminates were cured at 350° F for 2 hours at 80 psi and under vacuum and then at 450° F under free standing conditions. The results are recorded in Table 4. The oligomer containing material did not undergo stress cracking.

A sample of the reactive oligomer composition of this Example, i.e., a sample without carbon fiber, was cured, sectioned and stained as described in this invention. The resulting photomicrograph showing phase separated morphology is shown by Figure 1. The light areas indicate the continuous phase. The dark areas indicate the discontinuous phase.

TABLE 4

| Example 21 | | | |
|---|---|---|---|
| | | Oligomer Containing Material | Non-Oligomer Containing Material |
| Neat Resin Properties | Wet Tg, ° C<br>$K_{IC}$ MPam$^{1/2}$ | 219<br>1.35 | 210<br>0.8 |
| Carbon Fiber Composite Properties | PIC ksi at 1500 in pound/in thickness | 35.8 | 10 |

## Claims

1. A terminally unsaturated oligomer having a terminal amine group or a terminal carboxylic acid derivative group and a glass transition temperature ($T_g$) above about 170°, in which the unsaturated moiety has two double bonds in conjugated relationship, and which is soluble in an uncured multifunctional maleimide.

2. A terminally unsaturated oligomer as claimed in claim 1, further characterized in that the uncured multifunctional maleimide has the formula

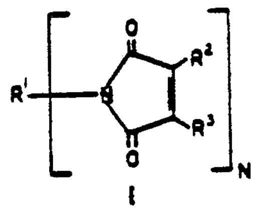

I

in which $R^1$ is the residium of an aryl, alkylaryl, or alkylamine or prepolymers thereof; $R^2$ is hydrogen, halogen, aryl, or lower alkyl group of from 1 to about 10 carbon atoms; $R^3$ is hydrogen, halogen, aryl or

lower alkyl group of from 1 to about 10 carbon atoms; and N is an interger of from 1 to about 10.

3. A terminally unsaturated oligomer as claimed in claim 1 or 2, further characterized in that it is prepared by reacting a diamine with a dianhydride, a diacid chloride, a diacid, an anhydride acid chloride, or an anhydride acid to form an intermediate oligomer, the terminal functional groups of which are reacted with functional groups of a complementary unsaturated organic compound.

4. A terminally unsaturated oligomer as claimed in claim 1, 2 or 3, further characterized in that it is prepared by reaction of a diamine having one or more of the formulas

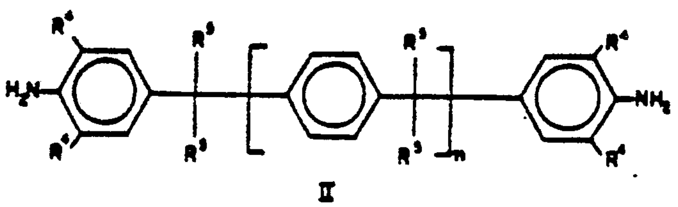

II

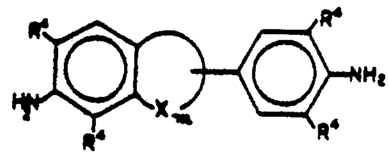

III

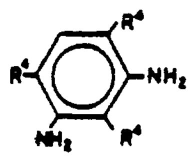

IV

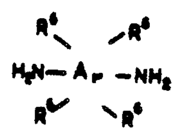

V

in which $R^4$ is an alkyl, aryl, alkylaryl, halogen or hydrogen; $R^5$ is methyl or lower alkyl; n is 0 to 4; x is methylene and m is 3 to 6; Ar is aryl or alkylaryl; and $R^6$ is alkyl, aryl, arylalkyl, or halogen and the four $R^6$ groups are on adjacent carbon atoms to the two amine groups and such groups may be the same or different; and a dicarboxylic acid derivative and an unsaturated organic compound having a pendant group complementary to the end group of said reaction product of amine and dicarboxylic acid derivative.

5. The terminally unsaturated oligomer as claimed in claim 3 or 4, further characterized in that it has the general formulae $C\text{-}(AB)_y\text{-}AC$ or $C\text{-}(BA)_y\text{-}BC$, in which A is the residium of a diamine, B is the residium of a dicarboxylic acid derivative and C is the residium of the complementary unsaturated compound, and y ranges between 1 and 60.

6. A thermosetting resin composition comprising a mixture of the terminally unsaturated oligomer of any of the preceeding claims and the multifunctional maleimide of Claim 1 or 2.

7. A thermosetting resin composition as claimed in claim 6, further characterized in that it comprises about 5 to about 80 weight percent of the terminally unsaturated oligomer and about 20 to about 95 weight percent of the multifunctional maleimide.

8. A thermosetting resin composition as claimed in claim 6 or 7, further characterized in that a reactive diluent is admixed with the terminally unsaturated oligomer and the multifunctional maleimide.

9. A thermosetting resin composition as claimed in claim 8, further characterized in that the reactive diluent has the formulae

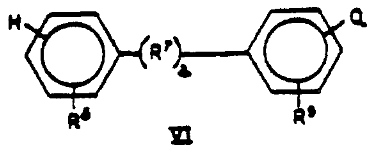

VI

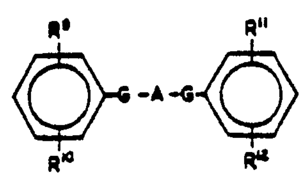

VII

where $R^7$ represents one of the radicals $-CH_2-$, $-\overset{CH_3}{\underset{CH_3}{C}}-$,

$-SO_2-$, -SO-, -S- and -O-; a is 0 to 1; and H and Q are -OH, $-NH_2$, -SH, or hydrogen, and are the same or different and $R^8$ and $R^9$ are unsaturated alkyl groups having one to eight carbon atoms in the molecule and may be the same or different; and $R^9$ and $R^{11}$ are unsaturated alkyl or aryl groups and may be the same or different, $R^{10}$ and $R^{12}$ are hydrogen, or alkyl or aryl ether groups and G is -O- or -S-or -NH-, and A is the residuum of a dihalide.

10. A thermosetting resin composition as claimed in claim 8, further characterized in that it comprises about 5 to about 80 weight percent of the terminally unsaturated oligomer, about 20 to about 95 weight percent of the multifunctional maleimide, and about 5 to about 60 weight percent of the reactive diluent.

11. A thermosetting resin composition as claimed in claim 6 or 7, further characterized in that it comprises: (1) between about 20 and about 95 weight percent of the multifunctional maleimide of claim 1 or 2, (2) between about 5 and about 80 weight percent of a reactive imide, amide or amideimide oligomer prepared by reacting a molar excess of a dianhydride, diacid chloride or diacid; or anhydride acid chloride or acid or mixture of diacid chloride and dianhydride respectively (B) with a diamine (A) or a molar excess of diamine (A) with a dianhydride; diacid chloride or diacid, or acid anhydride acid chloride or mixture of diacid chloride and dianhydride (B) to give an intermediate oligomer with amine or carboxylic acid end groups which are reacted with an unsaturated organic compound (C) having an organic reactive group complementary to the end group of said intermediate oligomer to give said reactive oligomer of either $C-(AB)_y-AC$ or $C-(BA)_y-BC$ oligomer types respectively where y is 1 to 60 and whose glass transition temperature is above about 200° Centigrade, and (3) between about 0 and about 60 weight percent of a reactive diluent, wherein said reactive imide, amide or amideimide oligomer is soluble in said composition.

12. A thermosetting resin composition as claimed in claim 11, further characterized in that the reactive polyimide oligomer comprises the reaction product of p-bis-(4-isopropylidene-2,6-dimethylaniline)benzene and 3,3′,4,4′-benzophenonetetracarboxylic dianhydride reacted with sorboyl chloride.

13. A thermosetting resin composition as claimed in claim 11, further characterized in that the reactive polyimide oligomer comprises the reaction product of p-bis-(4-isopropylidene-2,6-dimethylaniline benzene and 3,3′,4,4′-benzophenonetetracarboxylic dianhydride reacted in the presence of 2-isopropenylaniline.

14. A thermosetting resin composition as claimed in claim 11, further characterized in that the reactive multifunctional maleimide is benzenebismaleimide or diphenylmethanebismaleimide.

15. A thermosetting resin composition as claimed in claim 11, further characterized in that the reactive diluent is 2,2-(3-alkenyl-4-hydroxyphenyl)propane, 3,3′-diallyl-2,2′-dihydroxybiphenyl and its positional and unsaturated isomers, or 4,4′-bis-(o-propenylphenoxy)-diphenyl sulfone.

16. A thermosetting resin composition as claimed in any of claims 6 to 15, further characterized in that when cured thermally it exhibits phase separated morphology.

17. Use of the terminally unsaturated oligomer as claimed in any of Claims 1 to 5 to make a thermosetting resin composition as claimed in any of Claims 6 to 16.

Claims for the following Contracting State: ES

1. Method of producing a terminally unsaturated oligomer having a terminal amine group or a terminal carboxylic acid derivative group and a glass transition temperature ($T_g$) above about 170° C, in which the unsaturated moiety has two double bonds in conjugated relationship, and which is soluble in an uncured multifunctional maleimide, characterized in that it is prepared by reacting a diamine with a dianhydride, a diacid chloride, a diacid, an anhydride acid chloride, or an anhydride acid to form an intermediate oligomer, the terminal functional groups of which are reacted with functional groups of a complementary unsaturated organic compound.

2. Method of producing a terminally unsaturated oligomer according to claim 1, further characterized in that the uncured multifunctional maleimide has the formula

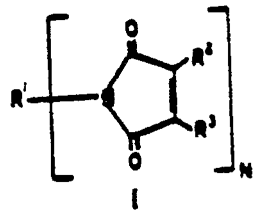

I

in which $R^1$ is the residium of an aryl, alkylaryl, or alkylamine or prepolymers thereof; $R^2$ is hydrogen,

halogen, aryl, or lower alkyl group of from 1 to about 10 carbon atoms; $R^3$ is hydrogen, halogen, aryl or lower alkyl group of from 1 to about 10 carbon atoms; and N is an interger of from 1 to about 10.

3. Method of producing a terminally unsaturated oligomer according to claim 1 or 2, further characterized in that a diamine having one or more of the formulas

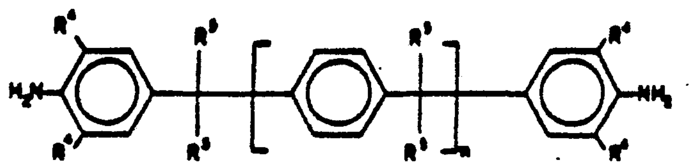

II

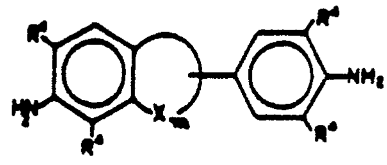

III

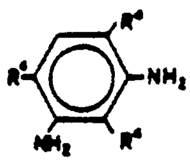

IV

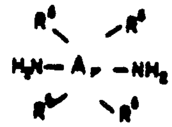

V

in which $R^4$ is an alkyl, aryl, alkylaryl, halogen or hydrogen; $R^5$ is methyl or lower alkyl; n is 0 to 4; x is methylene and m is 3 to 6; Ar is aryl or alkylaryl; and $R^6$ is alkyl, aryl, arylalkyl, or halogen and the four $R^6$ groups are on adjacent carbon atoms to the two amine groups and such $R^6$ groups may be the same or different; and a dicarboxylic acid derivative and an unsaturated organic compound having a pendant group complementary to the end group of said reaction product of amine and dicarboxylic acid derivative are reacted.

4. Method of producing the terminally unsaturated oligomer according to claim 3, further characterized in that an oligomer with the general formulae $C-(AB)_y-AC$ or $C-(BA)_y-BC$, in which A is the residium of a diamine, B is the residium of a dicarboxylic acid derivative and C is the residium of the complementary unsaturated compound, and y ranges between 1 and 60 is produced.

5. Method of producing a thermosetting resin composition characterized in that the terminally unsaturated oligomer produced by a method of any of the preceeding claims and an uncured multifunctional maleimide wherein the terminally unsaturated oligomer is soluble are mixed.

6. Method of producing a thermosetting resin composition according to claim 5, further characterized in that about 5 to about 80 weight percent of the terminally unsaturated oligomer and about 20 to about 95 weight percent of the multifunctional maleimide are mixed.

7. Method of producing a thermosetting resin composition according to claim 5 or 6, further characterized in that a reactive diluent is admixed with the terminally unsaturated oligomer and the multifunctional maleimide.

8. Method of producing a thermosetting resin composition according to claim 7, further characterized in that the reactive diluent has the formulae

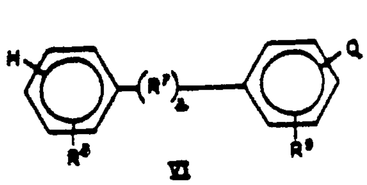

VI

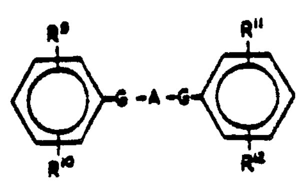

VII

where $R^7$ represents one of the radicals $-CH_2-$, $-\overset{CH_3}{\underset{CH_3}{C}}-$,

$-SO_2-$, -SO-, -S- and -O-; a is 0 to 1; and H and Q are -OH, $-NH_2$, -SH, or hydrogen, and are the same or different and $R^8$ and $R^9$ are unsaturated alkyl groups having one to eight carbon atoms in the molecule and may be the same or different; and $R^9$ and $R^{11}$ are unsaturated alkyl or aryl groups and may be the same or different, $R^{10}$ and $R^{12}$ are hydrogen, or alkyl or aryl ether groups and G is -O- or -S-or-NH-, and A is the residuum of a dihalide.

9. Method of producing a thermosetting resin composition according to claim 7, further characterized in that about 5 to about 80 weight percent of the terminally unsaturated oligomer, about 20 to about 95 weight percent of the multifunctional maleimide, and about 5 to about 60 weight percent of the reactive diluent are mixed.

10. Method of producing a thermosetting resin composition according to claim 5 or 6, further characterized in that (1) between about 20 and about 95 weight percent of the multifunctional maleimide produced by the method of claim 1 or 2, (2) between about 5 and about 80 weight percent of a reactive imide, amide or amideimide oligomer prepared by reacting a molar excess of a dianhydride, diacid chloride or diacid; or anhydride acid chloride or acid or mixture of diacid chloride and dianhydride respectiveley (B) with a diamine (A) or a molar excess of diamine (A) with a dianhydride; diacid chloride or diacid, or acid anhydride acid chloride or mixture of diacid chloride and dianhydride (B) to give an intermediate oligomer with amine or carboxylic acid end groups which are reacted with an unsaturated organic compound (C) having an organic reactive group complementary to the end group of said intermediate oligomer to give said reactive oligomer of either $C-(AB)_y-AC$ or $C-(BA)_y-BC$ oligomer types respectively where y is 1 to 60 and whose glass transition temperature is above about 200° Centigrade, and (3) between about 0 and about 60 weight percent of a reactive diluent, wherein said reactive imide, amide or amideimide oligomer is soluble in said composition are mixed.

11. Method of producing a thermosetting resin composition according to claim 10, further characterized in that the reactive polyimide oligomer comprises the reaction product of p-bis-(4-isopropylidene-2,6-dimethylaniline)benzene and 3 ,3′,4,4′-benzophenonetetracarboxylic dianhydride reacted with sorboyl chloride.

l2. Method of producing a thermosetting resin composition according to claim 10, further characterized in that the reactive polyimide oligomer comprises the reaction product of p-bis-(4-isopropylidene-2,6-dimethylaniline)benzene and 3,3′,4,4′-benzophenonetetracarboxylic dianhydride reacted in the presence of 2-isopropenylaniline.

13. Method of producing a thermosetting resin composition according to claim 10, further characterized in that the reactive multifunctional maleimide is benzenebismaleimide or diphenylmethanebismaleimide.

14. Method of producing a thermosetting resin composition according to claim 10, further characterized in that the reactive diluent is 2,2-(3-alkenyl-4-hydroxyphenyl)propane, 3,3′-diallyl-2,2′-dihydroxybiphenyl and its positional and unsaturated isomers, or 4,4′-bis-(o-propenylphenoxy)diphenyl sulfone.

15. Method of producing a thermosetting resin composition according to any of claims 5 to 14, further characterized in that when cured thermally it exhibits phase separated morphology.

16. Use of the terminally unsaturated oligomer produced by a method according to claims 1 to 4 to make a thermosetting resin composition according to claims 5-15.

European Patent Office

# EUROPEAN SEARCH REPORT

Application Number

EP 88 11 7165

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 184 591 (GENERAL ELECTRIC) * claims 1-15; page 11, lines 33-37 * | 1,3-5 | C 08 F 222/40<br>C 08 L 79/08<br>C 08 G 73/10<br>C 08 G 73/14<br>C 08 G 69/32 |
| X | EP-A-0 223 958 (GENERAL ELECTRIC) * claim 1 * | 1,3-5 | |
| X | EP-A-0 113 314 (CIBA-GEIGY) *claim 1 * | 6 | |
| A | EP-A-0 040 415 (KANEGAFUCHI KAGAKU) * claims 1-10; page 1, line 35 - page 2, line 4 * | 1-7 | |
| A | EP-A-0 163 518 (M & T CHEMICALS) * claims 1-7,10,11; page 4, line 25 - page 5, line 3 * | 1,3-5 | |
| A | EP-A-0 253 600 (AMOCO) * claims * | 8,9 | |
| A | DE-B-2 152 973 (RHONE-POULENC) * claims * | 6,7 | TECHNICAL FIELDS SEARCHED (Int. Cl.4) |
| A | DE-A-2 506 264 (RHONE-POULENC) * claims 1,2 * | 6,7 | C 08 F 222/00<br>C 08 L 79/00<br>C 08 G 73/00<br>C 08 G 69/00 |

The present search report has been drawn up for all claims

| Place of search | Date of completion of the search | Examiner |
|---|---|---|
| BERLIN | 04-07-1989 | BOEKER R.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)